# EUROPÄISCHE PATENTSCHRIFT

(11) **EP 2 947 430 B1**
(45) Veröffentlichungstag und Bekanntmachung des Hinweises auf die Patenterteilung: **09.11.2016**
(21) Anmeldenummer: 15166726.8
(22) Anmeldetag: 07.05.2015
(51) Int. Cl.: G01G 19/08, G01G 19/10, G01L 1/02

(54) **VERFAHREN ZUR ERFASSUNG DES LASTGEWICHTES**
METHOD FOR DETECTING THE LOAD WEIGHT
PROCÉDÉ DE DÉTECTION DU POIDS DE LA CHARGE

(30) Priorität: 23.05.2014 DE 102014107332
(43) Veröffentlichungstag der Anmeldung: 25.11.2015
(73) Patentinhaber: Linde Material Handling GmbH, 63743 Aschaffenburg (DE)
(72) Erfinder: Francois, Yves-Jocelyn, 63739 Aschaffenburg (DE); Wichmann, René, 48703 Stadtlohn (DE); Habenicht, Dr., Stefan, 64807 Dieburg (DE); Keller, Alexander, 63762 Großostheim (DE)
(74) Vertreter: Geirhos, Johann

(56) Entgegenhaltungen:
- EP-A1- 0 246 363

## Beschreibung

Die Erfindung betrifft ein Verfahren zur Erfassung des Lastgewichts. Insbesondere betrifft die Erfindung ein Verfahren zur Erfassung des Lastgewichtes bei einem Flurförderzeug mit einer hydraulischen Hubvorrichtung für ein Lastaufnahmemittel, das an einem Hubmast höhenbeweglich geführt ist, mit einem schaltbaren Ventil, durch das Hydraulikfluid in die Hubvorrichtung zugeleitet und/oder aus dieser abgelassen werden kann, sowie mit Druckerfassungsmitteln, insbesondere einem Drucksensor, zur Erfassung des Drucks des Hydraulikfluids in der hydraulischen Hubvorrichtung.

Bekannt sind unter den Flurförderzeugen solche mit einem Hubmast und einer an dem Hubmast höhenbeweglich geführten Lastaufnahmevorrichtung, insbesondere einer Lastgabel. Die bekannteste Ausführungsform eines solchen Flurförderzeugs ist ein Gabelstapler in Form eines Gegengewichtsgabelstaplers oder Schubmaststaplers. Dabei sind Ausführungsformen solcher Flurförderzeuge bzw. Gabelstapler bekannt, die eine Vorrichtung zur Erfassung der aufgenommenen Last aufweisen. Durch eine solche Vorrichtung bzw. ein solches Wiegesystem lässt sich die mit dem Flurförderzeug gehandhabte und transportierte Gesamtlast ermitteln, indem fortlaufend die jeweils aufgeladenen Lastgewichte erfasst und addiert werden, oder es können Kapazitätsgrenzen bestimmt bzw. von der Last abhängige Sicherheitseinstellungen des Flurförderzeugs in der Fahrzeugsteuerung festgelegt werden.

Neben Sensoren, die direkt das Lastgewicht bestimmen, ist es auch möglich, das Lastgewicht über den Druck in einem hydraulischen Hubzylinder des Hubmastes zu erfassen, durch den das Lastaufnahmemittel angehoben wird. Dabei wird mittels eines Drucksensors der Druck in dem hydraulischen Hubzylinder erfasst, beispielsweise während eines Hubvorgangs, insbesondere einem Abschnitt mit einer gleichmäßigen Hubgeschwindigkeit. Während einer solchen Bewegung des hydraulischen Hubzylinders herrscht ein Kräftegleichgewicht und sind zugleich verfälschende Kraftkomponenten aufgrund der Haftreibung ausgeschaltet, so dass der Druck, auch bezeichnet als Lastdruck, in dem hydraulischen Hubzylinder über die wirksame Kolbenfläche proportional zum getragenen Gewicht ist. Bei bekanntem Gewicht der Hubmastkomponenten und des Lastaufnahmemittels kann deshalb über den Lastdruck das auf der Lastaufnahmevorrichtung aufliegende Lastgewicht bestimmt werden. Dabei sind Ausführungen dieses Messverfahrens bekannt, bei denen der Lastdruck während eines Senkenvorgangs, während eines Hebenvorgangs und auch kombiniert bei Heben- und Senkenvorgang ermittelt wird.

Nachteilig an diesem Stand der Technik ist, dass dieses Wiegeverfahren eine bestimmte Zeitdauer für die Ermittlung des Lastgewichtes benötigt, da ein festgelegter Bewegungsablauf des Lastaufnahmemittels während des Wiegeverfahrens durchgeführt werden muss. Der Anwender muss auch das Lastaufnahmemittel aus einer bestimmten Hubrichtung, entweder Senken oder Heben, auf eine festgelegte Referenzhubhöhe zu bewegen, an der das Wiegeverfahren gestartet wird.

Wünschenswert ist jedoch eine möglichst kurze Zeitdauer des Wiegeverfahrens. Dabei ist insbesondere für den Beginn des Wiegeverfahrens die Abhängigkeit von der Anfahrtsrichtung bei der Hubbewegung und die zumeist festgelegte Referenzhubhöhe nachteilig in Bezug auf eine schnelle Durchführung des Wiegeverfahrens.

Der vorliegenden Erfindung liegt daher die Aufgabe zugrunde, ein Verfahren zur Erfassung des Lastgewichtes bei einem Flurförderzeug mit einer hydraulisch Lastaufnahmevorrichtung vorzusehen, das die zuvor genannten Nachteile vermeidet und mit dem eine schnelle und dennoch genauere Erfassung des Lastgewichtes mit geringem Aufwand möglich ist.

Diese Aufgabe wird durch ein Verfahren zur Erfassung des Lastgewichtes bei einem Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Erfassung des Lastgewichtes bei einem Flurförderzeug mit einer hydraulischen Hubvorrichtung für ein Lastaufnahmemittel, das an einem Hubmast höhenbeweglich geführt ist, mit einem schaltbaren Ventil, durch das Hydraulikfluid in die Hubvorrichtung zugeleitet und/oder aus dieser abgelassen werden kann, sowie mit Druckerfassungsmitteln, insbesondere einem Drucksensor, zur Erfassung des Drucks des Hydraulikfluids in der hydraulischen Hubvorrichtung, in einem ersten Schritt durch eine Steuerung das Ventil für einen kurzen Impulszeitraum geschaltet wird, indem durch einen Druckimpuls eine kurze Beaufschlagung mit Druck oder Entlastung von Druck erfolgt, wobei der Impulszeitraum so kurz ist, dass keine oder keine wesentliche Hubbewegung erfolgt und nach dem Schließen des Ventils der Druckverlauf eine abklingende Schwingung zeigt, wobei während der abklingenden Schwingung in einem Testzeitraum der Mittelwert des Drucks als Lastdruck von den Druckerfassungsmitteln erfasst wird.

Vorteilhaft ist dadurch nur eine sehr geringe Zeitdauer für die Ermittlung des Lastgewichtes erforderlich. Das Verfahren ist mit vergleichbarer Zeitdauer durchführbar, wie die Erfassung eines Lastgewichtes bei einem Flurförderzeug mit einem speziellen Sensor für das Lastgewicht, ohne dass der zusätzliche Aufwand eines solchen Sensors erforderlich ist. Durch den Druckimpuls, durch den entweder für einen sehr kurzen Zeitraum durch das Öffnen des Ventils der Druck in der hydraulischen Hubvorrichtung entlastet wird oder alternativ höherer Druck beaufschlagt wird, kommt es zu keiner Hubbewegung des Lastaufnahmemittels an dem Hubmast bzw. nur zu einer kaum merklichen Änderung der Hubhöhe in Form einer Mikrobewegung. Die Zeitdauer des Druckimpulses, der Impulszeitraum, ist so kurz bemessen bzw. sollte bevorzugt so kurz eingestellt werden, dass aufgrund der Massenträgheit der Bauteile des Hubmastes, bzw. des Lastaufnahmemittels, es zu keiner merklichen Hubbewegung kommen kann. Durch den Druckimpuls kommt es jedoch zu einer Anregung und zu einem Schwingen des Druckverlaufs, da das Lastaufnahmemittel, angehobene Teile des Hubmastes wie auch die aufliegenden Last um die Gleichgewichtslage Ihrer Hubhöhe schwingen, bis wieder das Gleichgewicht zwischen Druck in dem hydraulischen System und wirkendem Gesamtgewicht dieser Komponenten sich einstellt. Das Verfahren kann insbesondere vorteilhaft automatisch durchgeführt werden und ein Anwender ist nicht gezwungen, einen bestimmten Bewegungsablauf mit dem Lastaufnahmemittel durchzuführen, um das Lastgewicht zu ermitteln. Auch kann grundsätzlich das beschriebene Verfahren über die gesamte Hubhöhe durchgeführt werden, soweit für die Berechnung des aufliegenden Lastgewichtes aus dem Lastdruck Kalibrierungswerte zur Verfügung stehen. Diese Kalibrierungswerte können zuvor empirisch bestimmt werden oder berechnet werden und geben den Teil des Lastdrucks an, der durch die von der hydraulischen Hubvorrichtung stets getragenen und einer bestimmten Hubhöhe zugeordneten Massen verursacht wird, beispielsweise in einer ersten Hubstufe eine Kette, die Säule des Hydraulikfluids, eventuelle Anbaugeräte und das Lastaufnahmemittel. Aus dem Lastdruck kann das Gewicht der Last bestimmt werden über die für den Lastdruck wirksamen Flächen, beispielsweise eines Hubzylinders als hydraulischer Hubvorrichtung, und ein eventuelles Übersetzungsverhältnis einer Kraftübertragung. Dabei werden die Kalibrierungswerte bzw. Kalibrierungsdrücke berücksichtigt, so dass das Gewicht der Last auf dem Lastaufnahmemittel bestimmt werden kann. Indem der Testzeitraum während eines Abklingens der Schwingung liegt, werden verfälschende Effekte wie Haftreibung oder ähnliches ausgeschaltet. Es kann durch den Mittelwert mit derselben Genauigkeit ein Lastdruck erfasst werden, wie während einer gleichmäßigen Heben- oder Senkenbewegung. Das Verfahren kann vorteilhaft und vereinfachend auch in einem bestimmten Wiegebereich der Hubhöhe durchgeführt werden, für die nur ein fester oder eine geringe Anzahlung Kalibrierungswerte erforderlich sind. Auch in diesem Fall ist es schon nicht mehr erforderlich, einen bestimmten Wiegepunkt als Hubhöhe anzufahren und ergibt sich eine entsprechende Zeitersparnis. Vorteilhaft ist das Verfahren mit bereits vorhandenen Komponenten eines Flurförderzeugs durchführbar, da zumeist im Regelfall bereits eine ausreichend genaue Möglichkeit zur Erfassung des Drucks in dem Hubzylinder bzw. einer hydraulischen Hubvorrichtung ebenso wie ein schaltbares, insbesondere elektrisch schaltbares, Ventil vorhanden sind und das Verfahren durch eine Steuerung, beispielsweise eine Fahrzeugsteuerung, durchgeführt werden kann.

Vorteilhaft wird der Druckimpuls durch eine Beaufschlagung mit Druck gebildet.

Dadurch kann vorteilhaft ein sehr starker Druckimpuls gebildet werden, da der volle Bereich des Überdrucks zur Verfügung steht, und besteht keine Gefahr eines auch nur geringfügigen, unabsichtlichen Absenkens des Lastaufnahmemittels.

In einer günstigen Ausgestaltung des Verfahrens wird das Ventil innerhalb des Impulszeitraums zumindest zu einem Zeitpunkt vollständig geöffnet.

Das Ventil kann mit einem Rechtecksignal als Ansteuersignal geschaltet werden.

Ein solches schaltbares Ventil ist insbesondere als elektrisch schaltbares Hydraulikventil, beispielsweise über einen Magneten geschaltet, ausgeführt. Wird das elektrische Spannungssignal als Rechtecksignal ausgeführt, kann ein sehr kurzer und mit steilen Flanken versehener Impuls erzeugt werden, der eine vorteilhaft starke Anregung einer Schwingung erzeugt.

Vorteilhaft wird das Ventil mit einem Dreiecksignal als Ansteuersignal geschaltet.

Es ist auch möglich, Zwischenformen und weitere Formen des Signals zu bilden, beispielsweise ein über eine Dämpfung geglättetes Signal, durch das Geräusche, starke mechanische Belastungen und Schläge in dem Hydrauliksystem vermieden werden können.

In einer vorteilhaften Weiterbildung des Verfahrens wird der Testzeitraum durch die Abfolge von zwei oder mehr Extrema des Druckverlaufs festgelegt und der Lastdruck durch den Mittelwert der Druckwerte in diesem Testzeitraum bestimmt.

Beispielsweise kann eine Abfolge von vier aufeinanderfolgenden Maximalstellen des Druckverlaufs als Testzeitraum genommen werden. Indem der Mittelwert des Drucks über diesen gesamten Testzeitraum gebildet wird, kann ein Lastdruckwert gebildet werden, der nicht durch verfälschende Effekte beispielsweise der Haftreibung beeinflusst ist.

In einer weiterbildenden Ausgestaltung des Verfahrens wird der Testzeitraum durch die Abfolge von zwei oder mehr Extrema des Druckverlaufs festgelegt und der Lastdruck durch den Mittelwert der Extrema in diesem Testzeitraum bestimmt.

Dadurch wird als Mittelwert bzw. Lastdruckwert der Durchschnittswert mehrerer aufeinander folgender Minimalwerte und Maximalwerte genommen. Vorteilhaft müssen weniger Messwerte erfasst werden.

Der Testzeitraum kann durch die Zeitdauer bis zum Abklingen der Schwingung bestimmt und als Lastdruck der Druck am Ende des Testzeitraums bestimmt werden.

Die Länge des Testzeitraums vom Ende des Druckimpulses bis zum Erfassen des Lastdrucks kann dabei festgelegt sein, oder für jede Auswertung durch einen Rechenalgorithmus neu bestimmt werden.

Vorteilhaft wird das Verfahren in einem festgelegten Hubhöhenbereich durchgeführt.

Indem das Verfahren in einem festgelegten Hubhöhenbereich als Wiegebereich durchgeführt wird, vereinfacht dies die Kalibrierung.

Es kann ein Kalibrierungsdruck ermittelt werden, indem das Verfahren ohne Last durchgeführt wird.

Wie bereits zuvor geschildert, kann dadurch ein Anteil des Lastdrucks bestimmt werden, der nicht durch die aufliegende Last, sondern durch die weiteren, von der hydraulischen Hubvorrichtung getragenen Massen, wie einer ersten Hubstufe, der Kette, der Säule des Hydraulikfluids in einem Hydraulikzylinder, der Lastaufnahmevorrichtung sowie eventuellen Anbaugeräten herrührt. Dieser Anteil des Lastdrucks, auch bezeichnet als Mastdruck oder Kalibrierungsdruck, muss von dem Lastdruck abgezogen werden bei der Bestimmung des eigentlichen Gewichtes der Last. Dieser Kalibrierungsdruck lässt sich in einem Kalibrierungsvorgang auf einfache Art und Weise bestimmen, indem das Verfahren ohne eine auf der Lastaufnahmevorrichtung aufliegende Last durchgeführt wird. Insbesondere kann bei dem Flurförderzeug während des Betriebs immer wieder erneut eine Kalibrierung durchgeführt werden und können somit Effekte des Verschleißes sowie der Alterung berücksichtigt werden.

Vorteilhaft wird der Kalibrierungsdruck für eine festgelegte Hubhöhe ermittelt.

Diese festgelegte Hubhöhe kann in einem Hubhöhenbereich liegen, der als Wiegebereich definiert ist. Wird das Verfahren in diesen Bereich durchgeführt, so kann mit ausreichender Genauigkeit das Gewicht der Last bestimmt werden.

Vorteilhaft wird der Kalibrierungsdruck für eine Mehrzahl von Hubhöhen in einem festgelegten Hubhöhenbereich ermittelt.

Dadurch ergibt sich innerhalb des Wiegebereichs eine größere Genauigkeit. Wenn Kalibrierungsbrücke mit einer ausreichend engen Verteilung über die gesamte Hubhöhe erfasst werden, kann bei allen Hubhöhen mit ausreichend großer Genauigkeit das Gewicht einer Last erfasst werden.

Die hydraulische Hubvorrichtung kann einen oder mehrere Hubzylinder umfassen.

Wenn das schaltbare Ventil durch das Ansteuersignal nicht vollständig geöffnet wird, sondern nur teilweise, so kann vorteilhaft die gewünschte Amplitude abhängig von dem Flurförderzeug, dem Hubmast sowie eventuell dem Bereich der möglichen Lastgewichte bestimmt werden.

Weitere Vorteile und Einzelheiten der Erfindung werden anhand der in den schematischen Figuren dargestellten Ausführungsbeispiele näher erläutert. Hierbei zeigt
- Fig. 1: schematisch in einem Diagramm Ansteuersignale für ein schaltbares Ventil, das bei dem erfindungsgemäßen Verfahren verwendet wird,
- Fig. 2: in einem Diagramm einen Druckverlauf mit einer Erfassung des Lastdrucks,
- Fig. 3: in einem Diagramm einen Druckverlauf mit einer alternativen Erfassung des Lastdrucks,
- Fig. 4: in einem Diagramm einen Druckverlauf mit einer weiteren, alternativen Erfassung des Lastdrucks,
- Fig. 5: schematisch die Erfassung von Kalibrierungsdrücken für mehrere Hubhöhen und
- Fig. 6: schematisch die Erfassung eines Kalibrierungsdruckes für eine Hubhöhe.

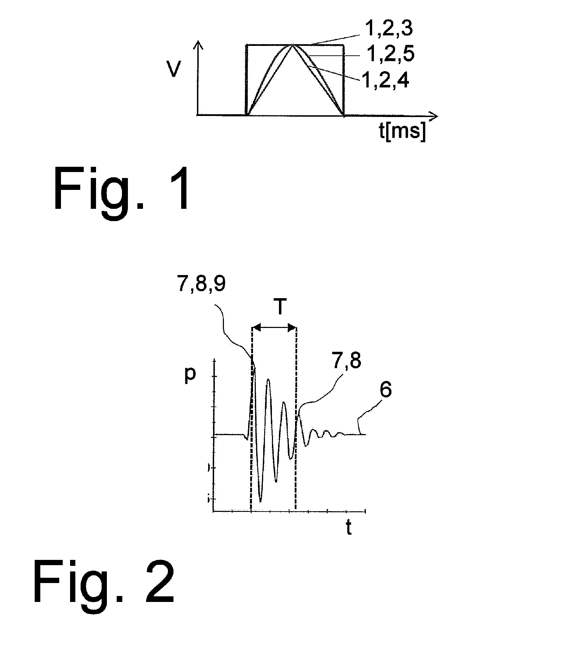

Die Fig. 1 zeigt schematisch in einem Diagramm Ansteuersignale 1 für ein nicht dargestelltes, schaltbares Ventil, das bei dem erfindungsgemäßen Verfahren verwendet wird. Dargestellt ist ein Spannungssignal 2 über der Zeit t in Millisekunden. In einer ersten Alternative ist das Ansteuersignal 1 für das Ventil ein Rechtecksignal 3. In demselben Diagramm ist als weitere Alternative für das Ansteuersignal 1 ein Dreiecksignal 4 dargestellt. Als dritte Möglichkeit ist ein Ansteuersignal 1 als gedämpftes Signal 5 wiedergegeben. Durch diese Ansteuersignale 1 wird das Ventil mit seiner maximalen Öffnung und für einen so kurzen Zeitraum im Millisekundenbereich geöffnet, dass es zu keiner Hubbewegung kommt, sondern höchstens nur zu einer Mikrohubbewegung. Durch das in jedem Fall rasche Ansteigen des Ansteuersignals 1 bis zur maximalen Öffnung des Ventil und ebenso rasche Schließen entsteht ein starker Druckimpuls, der zu einer abklingenden Schwingung des Drucks in der hydraulischen Hubvorrichtung führt.

Die Fig. 2 zeigt in einem Diagramm einen Druckverlauf 6 des Druckes p über der Zeit t mit einer Erfassung des Lastdrucks in einem Testzeitraum T, der dem Zeitraum von vier aufeinanderfolgenden Extrema 7, im vorliegenden Beispielsfall Maximalwerten 8 des Druckverlaufs 6 während einer abklingenden Schwingung, entspricht. Beginnend mit dem Druckimpuls ergibt sich ein erstes Maximum 9 des Druckverlaufs 6, der nachfolgend in einer gedämpften Schwingung abklingt. Über den Testzeitraum T wird der Druck p erfasst und ein Mittelwert gebildet, der als Lastdruckwert genommen wird für die Bestimmung des Gewichtes der aufliegenden Last.

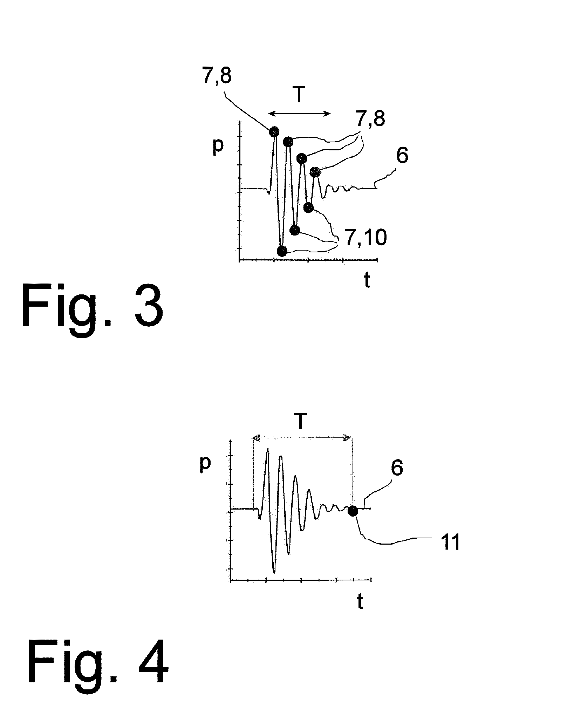

Die Fig. 3 zeigt in einem Diagramm einen Druckverlauf 6 mit einer alternativen Erfassung des Lastdrucks. Bei diesem Ausführungsbeispiel werden über den Testzeitraum T, der sich etwa über den Zeitraum des Abklingens der Schwingung erstrecken kann, alle Extrema 7 erfasst. Die Zeitdauer des Testzeitraums T kann beispielsweise festgelegt werden, bis die Amplitude unter einen Schwellenwert fällt. Der Mittelwert des Drucks als Lastdruck wird gebildet, indem der Durchschnittswert zwischen Maximalwerten 8 und Minimalwerten 10 gebildet wird. Bevorzugt wird dabei auf eine genügend große Anzahl von Extrema 7 zurückgegriffen und eine gleiche Anzahl von Maximalwerten 8 sowie Minimalwerten 10 genommen, um einen Fehler durch das Abklingen der Schwingung und die sich dadurch reduzierende Amplitude der Extrema 7 zu verhindern bzw. zu minimieren.

Die Fig. 4 zeigt in einem Diagramm einen Druckverlauf 6 mit einer weiteren alternativen Erfassung des Lastdrucks. Bei diesem Ausführungsbeispiel wird der Testzeitraum T durch die Zeitdauer bis zum Abklingen der Schwingung bestimmt. Als Lastdruck 11 wird der Druck p am Ende des Testzeitraums T bestimmt Die Länge des Testzeitraums T vom Ende des Druckimpulses bis zum Erfassen des Lastdrucks kann dabei festgelegt sein, oder für jede Auswertung durch einen Rechenalgorithmus neu bestimmt werden.

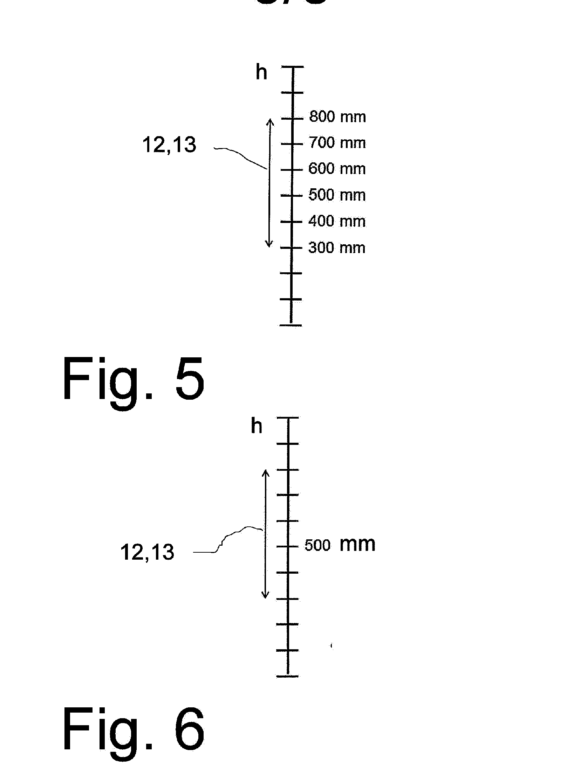

Die Fig. 5 zeigt schematisch die Erfassung von Kalibrierungsdrücken für mehrere Hubhöhen. Verteilt über ein Hubhöhenbereich 12, der einem Wiegebereich 13 entspricht, in dem das Gewicht der Last durch das Verfahren bestimmt wird, erfolgt bei insgesamt sechs Hubhöhenwerten von 300 mm bis 800 mm eine Erfassung eines Kalibrierungsdrucks. Dadurch kann bei jeder Bestimmung des Gewichtes der Last innerhalb des Wiegebereichs 13 ein geeigneter Kalibrierungsdruck genutzt werden.

Die Fig. 6 zeigt schematisch die Erfassung eines Kalibrierungsdruckes für eine Hubhöhe von 500 mm, die in der Mitte des Wiegebereichs 13 bzw. Hubhöhenbereichs 12 angeordnet ist.

## Patentansprüche

1. Verfahren zur Erfassung des Lastgewichtes bei einem Flurförderzeug mit einer hydraulischen Hubvorrichtung für ein Lastaufnahmemittel, das an einem Hubmast höhenbeweglich geführt ist, mit einem schaltbaren Ventil, durch das Hydraulikfluid in die Hubvorrichtung zugeleitet und/oder aus dieser abgelassen werden kann, sowie mit Druckerfassungsmitteln, insbesondere einem Drucksensor, zur Erfassung des Drucks (p) des Hydraulikfluids in der hydraulischen Hubvorrichtung,
**dadurch gekennzeichnet,**
**dass** in einem ersten Schritt durch eine Steuerung das Ventil für einen kurzen Impulszeitraum geschaltet wird, indem durch einen Druckimpuls eine kurze Beaufschlagung mit Druck (p) oder Entlastung von Druck (p) erfolgt, wobei der Impulszeitraum so kurz ist, dass keine oder keine wesentliche Hubbewegung erfolgt und nach dem Schließen des Ventils der Druckverlauf (6) eine abklingende Schwingung zeigt,
wobei während der abklingenden Schwingung in einem Testzeitraum (T) der Mittelwert des Drucks als Lastdruck (11) von den Druckerfassungsmitteln erfasst wird.

2. Verfahren nach Anspruch 1,
**dadurch gekennzeichnet,**
**dass** der Druckimpuls durch eine Beaufschlagung mit Druck (p) gebildet wird.

3. Verfahren nach Anspruch 1 oder 2,
**dadurch gekennzeichnet,**
**dass** das Ventil innerhalb des Impulszeitraums zumindest zu einem Zeitpunkt vollständig geöffnet wird

4. Verfahren nach einem der Ansprüche 1 bis 3,
**dadurch gekennzeichnet,**
**dass** das Ventil mit einem Rechtecksignal (3) als Ansteuersignal (1) geschaltet wird.

5. Verfahren nach einem der Ansprüche 1 bis 4,
**dadurch gekennzeichnet,**
**dass** das Ventil mit einem Dreiecksignal (4) als Ansteuersignal (1) geschaltet wird.

6. Verfahren nach einem der Ansprüche 1 bis 5,
**dadurch gekennzeichnet,**
**dass** der Testzeitraum (T) durch die Abfolge von zwei oder mehr Extrema (7) des Druckverlaufs (6) festgelegt wird und der Lastdruck durch den Mittelwert der Druckwerte (p) in diesem Testzeitraum (T) bestimmt wird.

7. Verfahren nach einem der Ansprüche 1 bis 6,
**dadurch gekennzeichnet,**
**dass** der Testzeitraum (T) durch die Abfolge von zwei oder mehr Extrema (7) des Druckverlaufs (6) festgelegt wird und der Lastdruck durch den Mittelwert der Extrema (7) in diesem Testzeitraum (T) bestimmt wird.

8. Verfahren nach einem der Ansprüche 1 bis 6,
**dadurch gekennzeichnet,**
**dass** der Testzeitraum (T) durch die Zeitdauer bis zum Abklingen der Schwingung bestimmt wird und als Lastdruck (11) der Druck (6) am Ende des Testzeitraums (T) bestimmt wird.

9. Verfahren nach einem der Ansprüche 1 bis 8,
**dadurch gekennzeichnet,**
**dass** das Verfahren in einem festgelegten Hubhöhenbereich (12) durchgeführt wird.

10. Verfahren nach einem der Ansprüche 1 bis 9,
**dadurch gekennzeichnet,**
**dass** ein Kalibrierungsdruck ermittelt wird, indem **das** Verfahren ohne Last durchgeführt wird.

11. Verfahren nach Anspruch 9,
**dadurch gekennzeichnet,**
**dass** der Kalibrierungsdruck für eine festgelegte Hubhöhe ermittelt wird.

12. Verfahren nach Anspruch 9,
**dadurch gekennzeichnet,**
**dass** der Kalibrierungsdruck für eine Mehrzahl von Hubhöhen in einem festgelegten Hubhöhenbereich (12) ermittelt wird.

13. Verfahren nach einem der Ansprüche 1 bis 12,
**dadurch gekennzeichnet,**
**dass** die hydraulische Hubvorrichtung einen oder mehrere Hubzylinder umfasst.

## Claims

1. Method for detecting the load weight in an industrial truck comprising a hydraulic lifting apparatus for a load pickup means which is guided in a vertically movable manner on a lifting mast, comprising a switchable valve through which hydraulic fluid can be conducted into the lifting apparatus and/or can be discharged from the said lifting apparatus, and also comprising pressure detection means, in particular a pressure sensor, for detecting the pressure (p) of the hydraulic fluid in the hydraulic lifting apparatus,
**characterized**
**in that**, in a first step, the valve is switched by a controller for a short pulse period by a pressure pulse briefly applying pressure (p) or relieving pressure (p), wherein the pulse period is so short that there is no or substantially no lifting movement and the pressure profile (6) exhibits decaying oscillation after the valve is closed,
wherein, during the decaying oscillation, the average value of the pressure is detected by the pressure detection means as load pressure (11) in a test period (T).

2. Method according to Claim 1,
**characterized**
**in that** the pressure pulse is formed by applying pressure (p).

3. Method according to Claim 1 or 2,
**characterized**
**in that** the valve is fully opened at least at one time point within the pulse period.

4. Method according to one of Claims 1 to 3,
**characterized**
**in that** the valve is switched by a square-wave signal (3) as drive signal (1).

5. Method according to one of Claims 1 to 4,
**characterized**
**in that** the valve is switched by a triangular signal (4) as drive signal (1).

6. Method according to one of Claims 1 to 5,
**characterized**
**in that** the test period (T) is defined by the sequence of two or more extremes (7) of the pressure profile (6), and the load pressure is determined by the average value of the pressure values (p) in this test period (T).

7. Method according to one of Claims 1 to 6,
**characterized**
**in that** the test period (T) is defined by the sequence of two or more extremes (7) of the pressure profile (6), and the load pressure is determined by the average value of the extremes (7) in this test period (T).

8. Method according to one of Claims 1 to 6,
**characterized**
**in that** the test period (T) is determined by the length of time until decaying of the oscillation, and the pressure (6) is determined as load pressure (11) at the end of the test period (T).

9. Method according to one of Claims 1 to 8,
**characterized**
**in that** the method is carried out in a defined lifting height range (12).

10. Method according to one of Claims 1 to 9,
**characterized**
**in that** a calibration pressure is ascertained by the method being carried out under zero load.

11. Method according to Claim 9,
**characterized**
**in that** the calibration pressure is ascertained for a defined lifting height.

12. Method according to Claim 9,
**characterized**
**in that** the calibration pressure is ascertained for a plurality of lifting heights in a defined lifting height range (12).

13. Method according to one of Claims 1 to 12,
**characterized**
**in that** the hydraulic lifting apparatus comprises one or more lifting cylinders.

## Revendications

1. Procédé de détection du poids de la charge dans un chariot élévateur, comportant un dispositif de levage hydraulique destiné à un moyen de réception de charge qui est guidé de manière mobile en hauteur sur un mât de levage, comportant une soupape pouvant être activée, à travers laquelle un fluide hydraulique est acheminé dans le dispositif de levage et/ou peut en être expulsé, et comportant également des moyens de détection de pression, en particulier un capteur de pression, destinés à détecter la pression (p) du fluide hydraulique dans le dispositif de levage hydraulique, **caractérisé en ce que**, lors d'une première étape, la soupape est activée pendant un court intervalle de temps d'impulsion par une unité de commande par le fait qu'il se produit sous l'effet d'une impulsion de pression, une courte application de pression (p) ou une courte réduction de pression (p), dans lequel l'intervalle de temps d'impulsion est suffisamment court pour qu'il ne se produise aucun ou sensiblement aucun mouvement de levage et qu'après la fermeture de la soupape, la courbe de pression (6) présente une oscillation décroissante,
dans lequel, pendant l'oscillation décroissante, la valeur moyenne de la pression au cours d'un intervalle de temps de test (T) est détectée en tant que pression de charge (11) par les moyens de détection de pression.

2. Procédé selon la revendication 1,
**caractérisé en ce que** l'impulsion de pression est formée par application d'une pression (p).

3. Procédé selon la revendication 1 ou 2,
**caractérisé en ce qu'**en au moins en un point dans le temps, la soupape est entièrement ouverte à l'intérieur de l'intervalle de temps d'impulsion.

4. Procédé selon l'une quelconque des revendications 1 à 3,
**caractérisé en ce que** la soupape est activée par un signal rectangulaire (3) en tant que signal de commande (1).

5. Procédé selon l'une quelconque des revendications 1 à 4,
**caractérisé en ce que** la soupape est activée par un signal triangulaire (4) en tant que signal de commande (1).

6. Procédé selon l'une quelconque des revendications 1 à 5,
**caractérisé en ce que** l'intervalle de temps de test (T) est défini par la succession de deux extrêmes (7) ou plus de la courbe de pression (6) et **en ce que** la pression de charge est déterminée par la valeur moyenne de la valeur de pression (p) au cours dudit intervalle de temps de test (T).

7. Procédé selon l'une quelconque des revendications 1 à 6,
**caractérisé en ce que** l'intervalle de temps de test (T) est défini par la succession de deux extrêmes (7) ou plus de la courbe de pression (6) et **en ce que** la pression de charge est déterminée par la valeur moyenne des extrêmes (7) au cours dudit intervalle de temps de test (T).

8. Procédé selon l'une quelconque des revendications 1 à 6,
**caractérisé en ce que** l'intervalle de temps (T) est déterminé par la durée s'écoulant jusqu'à la décroissance de l'oscillation et **en ce que** la pression (6) régnant à la fin de l'intervalle de temps (T) est déterminée en tant que pression de charge (11).

9. Procédé selon l'une quelconque des revendications 1 à 8,
**caractérisé en ce que** le procédé est mis en oeuvre dans un domaine de hauteurs de levage (12) défini.

10. Procédé selon l'une quelconque des revendications 1 à 9,
**caractérisé en ce qu'**une pression d'étalonnage est déterminée en mettant en oeuvre le procédé sans charge.

11. Procédé selon la revendication 9,
**caractérisé en ce que** la pression d'étalonnage est déterminée pour une hauteur de levage définie.

12. Procédé selon la revendication 9,
**caractérisé en ce que** la pression d'étalonnage est déterminée pour une pluralité de hauteurs de levage dans un domaine de hauteurs de levage (12) défini.

13. Procédé selon l'une quelconque des revendications 1 à 12,
**caractérisé en ce que** le dispositif hydraulique comprend un ou plusieurs vérins de levage.
